(19) Europäisches Patentamt
European Patent Office
Office européen des brevets

(11) **EP 4 529 016 A1**

(12) **EUROPEAN PATENT APPLICATION**

(43) Date of publication:
**26.03.2025 Bulletin 2025/13**

(21) Application number: **23198299.2**

(22) Date of filing: **19.09.2023**

(51) International Patent Classification (IPC):
*H02P 23/24* (2016.01)          *H02P 6/17* (2016.01)
*H02P 6/22* (2006.01)

(52) Cooperative Patent Classification (CPC):
**H02P 6/17; H02P 6/22; H02P 23/24**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Polestar Performance AB
405 31 Gothenburg (SE)**

(72) Inventor: **HU, Yifei
417 62 Göteborg (SE)**

(74) Representative: **Zacco Sweden AB
P.O. Box 5581
Löjtnantsgatan 21
114 85 Stockholm (SE)**

(54) **A METHOD FOR DETERMINING A RESOLVER OFFSET ANGLE OF AN ELECTRIC MOTOR**

(57)     The present invention relates to a method (100) for determining a new resolver offset angle (0') of a three-phase electric motor after change of a speed sign definition of said electric motor, as well as a device (200) thereof. The speed sign definition is changed by adjusting a current phase sequence and a resolver sequence of the electric motor. The method (100) comprises: obtaining (S102) a present resolver offset angle (θ), wherein the present resolver offset angle (θ) is a resolver offset angle of the electric motor prior to changing the speed sign definition; obtaining (S104) a first condition of the adjustment of the current phase sequence and a second condition of the adjustment of the resolver sequence used to achieve the change of speed sign definition; and determining (S106) the new resolver offset angle (0') based on the present resolver offset angle (θ) and a pre-defined rule, wherein the pre-defined rule is based on the first and second conditions.

100

S102
Obtaining a present resolver offset angle of an electric motor

S104
Obtaining a first condition and a second condition used to achieve a change of speed sign definition

S106
Determining a new resolver offset angle based on present resolver offset angle and pre-defined rule

S108
Transmitting new resolver offset angle to control system of the electric motor

S110
Update parameter settings used by control system based on new resolver offset angle

S112
Control electric motor based on the new resolver offset angle

Fig. 1

EP 4 529 016 A1

**Description**

TECHNICAL FIELD

The disclosed technology relates to the field of electric motors, and in particular to a method, device and computer program product for determining a new resolver offset angle of a three-phase electric motor after having changed a speed sign definition of said electric motor.

BACKGROUND

Electric motors are today widely used in various mechanical and electromechanical applications, such as electric vehicles, industrial machinery, and robotics. Precise control of these motors is essential for optimal performance. The electrical motors are typically controlled using 3-phase alternating currents and voltages, so called three-phase electric motors. Control of three-phase motors involve managing the voltage and current in each of the three phases to achieve the desired speed, torque, and direction of rotation. Moreover, resolver-based position sensing is commonly employed to achieve accurate rotor position feedback.

When an electric motor rotates, its speed sign is defined based on the rotation of the rotor. Viewed from the shaft end, the rotor can rotate either clockwise or anticlockwise. Which rotation direction that corresponds to positive speed sign and which corresponds to negative speed sign depends on how the speed sign is defined. Depending on the installation position or which application it is for, the speed sign definition may need to be defined in a different way from what is default or provided by the supplier of the electric motor. Having an incorrect speed sign definition results in the motor rotating in the opposite direction from what is intended, posing significant safety risks.

One common approach to change the speed sign definition is to change the current phase sequence and the resolver sequence. To change the current phase and resolver sequence, the physical connections of the motor can be changed, although this is a cumbersome process. Another option is to achieve the same effect in the software implementation, e.g. by implementing functions and parameters in the control strategy of the motor to handle the change in sequence. For instance, in order to change the current phase sequence, one could swap any two of the three phase inputs. In order to change the resolver sequence, one could either swap sine and cosine input signals before the resolver demodulation, or reverse both the position and speed signals after the resolver demodulation.

However, an effect of changing the speed sign definition of the electric motor is that a present resolver offset, provided e.g. by the motor supplier, is no longer applicable. Thus, a new resolver offset calibration is required to obtain the new resolver offset, which is a cumbersome and time consuming process. There is therefore need for improvements with respect to this.

SUMMARY

The herein disclosed technology seeks to mitigate, alleviate or eliminate one or more of the above-identified deficiencies and disadvantages in the prior art to address various problems relating to the determination of a resolver offset angle after having changed a speed sign definition of an electric motor.

More specifically, the inventors have realized a new and improved way of determining a new resolver offset angle of a three-phase electric motor after change of a speed sign definition of said electric motor.

Various aspects and embodiments of the disclosed technology are defined below and in the accompanying independent and dependent claims.

According to a first aspect, there is provided a method for determining a new resolver offset angle, $\Theta'$, of a three-phase electric motor after change of a speed sign definition of said electric motor. The speed sign definition is changed by adjusting a current phase sequence and a resolver sequence of the electric motor. The method comprises obtaining a present resolver offset angle, $\theta$, wherein the present resolver offset angle is a resolver offset angle of the electric motor prior to changing the speed sign definition. The method further comprises obtaining a first condition of the adjustment of the current phase sequence and a second condition of the adjustment of the resolver sequence used to achieve the change of speed sign definition. The method further comprises determining the new resolver offset angle based on the present resolver offset angle and a pre-defined rule, wherein the pre-defined rule is based on the first and second conditions.

The presently disclosed technology thus provides for a way of determining the new resolver offset angle without the need of performing any additional manual or automatic resolver calibration steps. Instead, the new resolver offset angle can be determined based on the present resolver offset angle, thus making it possible to utilize the results of an already performed resolver offset calibration. Thereby, the presently disclosed technology may be advantageous in that the new resolver offset angle can be determined in a more time-efficient and less cumbersome way. The present technology further reduces costs associated with electric motor calibration and installation.

The first condition of the adjustment of current phase sequence may be one of: (i) swapping a second and a third phase of the electric motor, (ii) swapping a first and the second phase of the electric motor, or (iii) swapping the first and the third phase of the electric motor. The above-mentioned conditions thus corresponds to three different ways of changing the current phase sequence of an electric motor.

The second condition of the change of resolver sequence may be one of: (iv) reversing a position and a speed signal demodulated from a resolver signal or (v) swapping a sin and cos signal of the resolver. The above-mentioned conditions thus corresponds to two different ways of changing the resolver sequence of an electric motor.

The pre-defined rule may be selected from a plurality of pre-defined rules based on the first and second conditions. The plurality of pre-defined rules may be provided as a look-up table in which the pre-defined rule is selected based on the first and second conditions.

In response to the first condition being (i) swapping the second and third phases, and the second condition being (iv) reversing a position and a speed signal demodulated from a resolver signal, the new resolver offset angle may be determined according to the pre-defined rule $\theta' = -\theta$.

In response to the first condition being (i) swapping the second and third phases, and the second condition being (v) swapping a sin and cos signal of the resolver, the new resolver offset angle may be determined according to the pre-defined rule $\theta' = -90 - \theta$.

In response to the first condition being (ii) swapping the first and second phases, and the second condition being (iv) reversing a position and a speed signal demodulated from a resolver signal, the new resolver offset angle may be determined according to the pre-defined rule $\theta' = 120 - \theta$.

In response to the first condition being (ii) swapping the first and second phases, and the second condition being (v) swapping a sin and cos signal of the resolver, the new resolver offset angle may be determined according to the pre-defined rule $\theta' = 30 - \theta$.

In response to the first condition being (iii) swapping the first and third phases and the second condition being (iv) reversing a position and a speed signal demodulated from a resolver signal, the new resolver offset angle may be determined according to the pre-defined rule $\theta' = 240 - \theta$.

In response to the first condition being (iii) swapping the first and third phases and the second condition being (v) swapping a sin and cos signal of the resolver, the new resolver offset angle may be determined according to the pre-defined rule $\theta' = 150 - \theta$.

The method may further comprise transmitting the new resolver offset angle to a control system of the electric motor.

The method may further comprise updating parameter settings used by the control system of the electric motor based on the new resolver offset angle.

The method may further comprise controlling the electric motor, using a control system of the motor, based on the new resolver offset angle.

According to a second aspect, there is provided a computer program product comprising instructions which, when the program is executed by a computing device, causes the computing device to carry out the method according to the first aspect. The above-mentioned features of the previous aspects, when applicable, apply to this second aspect as well. In order to avoid undue repetition, reference is made to the above.

According to a third aspect, there is provided a (non-transitory) computer-readable storage medium. The non-transitory computer-readable storage medium stores one or more programs configured to be executed by one or more processors of a processing system, the one or more programs comprising instructions for performing the method according to the first aspect. The above-mentioned features of the previous aspects, when applicable, apply to this third aspect as well. In order to avoid undue repetition, reference is made to the above.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a fourth aspect, there is provided a device for determining a new resolver offset angle of a three-phase electric motor after change of a speed sign definition of said electric motor. The speed sign definition is changed by adjusting a current phase sequence and a resolver sequence of the electric motor. The device comprises control circuitry. The control circuitry is configured to obtain a present resolver offset angle, wherein the present resolver offset angle is a resolver offset angle of the electric motor prior to changing the speed sign definition. The control circuitry is further configured to obtain a first condition of the adjustment of the current phase sequence and a second condition of the adjustment of the resolver sequence used to achieve the change of speed sign definition. The control circuitry is further configured to determine the new resolver offset angle based on the present resolver offset angle and a pre-defined rule, wherein the pre-defined rule is based on the first and second conditions.

The control circuitry may be further configured to transmit the new resolver offset angle to a control system of the electric motor.

The above-mentioned features of the previous aspects, when applicable, apply to this fourth aspect as well. In order to avoid undue repetition, reference is made to the above.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

Further embodiments are defined in the dependent claims. These and other features and advantages of the disclosed technology will in the following be further clarified with reference to the embodiments and variants described hereinafter.

BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:

Figure 1 is a schematic flowchart representation of a method for determining a new resolver offset angle of a three-phase electric motor after the change of a speed sign definition of said electric motor according to some embodiments.
Figure 2 is a schematic illustration of a device configured to perform the method for determining a new resolver offset angle of a three-phase electric motor after the change of a speed sign definition of said electric motor according to some embodiments.
Figure 3 schematically illustrates a resolver offset in a d- and q-axis reference frame.

DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus or device comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, B and C" or "at least one of A, B and C") is to be interpreted as either a conjunctive or disjunctive logic. Put differently, it may refer either to all elements, one element or combination of two or more elements of a set of elements. For example, the wording "A, B and C" may be interpreted as A or B or C, A and B and C, A and B, B and C, or A and C.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

As described above, the presently disclosed technology relates to the process of determining a resolver offset angle after a change of speed sign definition. The wording "speed sign definition" in the context of electric motors refers to the relationship between the input signals supplied to the motor and a resulting rotational direction. The speed sign definition is used in a control mechanism of the electric motor to define the rotating direction of the rotor. In one example, positive speed sign corresponds to that the rotor is rotating clockwise viewed from a shaft end, while negative speed sign corresponds to that the rotor is rotating anti-clockwise viewed from the shaft end. Changing the speed sign definition may then result in that the positive speed sign corresponds to anti-clockwise rotation, while negative speed sign corresponds to clockwise rotation. As is readily understood, depending on the specific realization, the positive and negative speed sign definitions as given above may as well be defined the other way around. As explained above in the background section, the speed sign definition may need to be defined in a different way (e.g. being reversed) from what is the present or default way as provided by the supplier of the motor, e.g. depending on the installation position, or the intended application. This can be achieved by changing a current phase sequence of the motor, i.e. by changing the input signals to the motor. Changing the input signals can either be done by changing physical connection of the motor, or in software.

When changing the speed sign definition, also a resolver of the electric motor needs to be adjusted. This can be achieved by changing a resolver sequence. A resolver is a type of electromechanical transducer that provides angular position information based on the interaction between magnetic fields and the rotating rotor of the electric motor. Factors such as manufacturing tolerances, installation misalignment, and temperature variations can contribute to a so-called resolver offset. Therefore, a resolver offset calibration procedure is necessary to determine and compensate for these errors to achieve precise motor control and to ensure accurate rotor position determination.

By resolver offset calibration operation, it is herein meant a process of calibrating a resolver offset of a resolver connected to the rotor of the motor. The resolver offset calibration can be used for adjusting the resolver signal output to compensate for any mechanical misalignment between the rotor and the resolver (i.e. an angular displacement between an actual rotor position and an estimated rotor position obtained from the demodulated resolver signals). Thus, the resolver offset is calibrated to ensure that the resolver accurately reflects the actual physical position of the rotor. To define the resolver offset more specifically, the concepts of direct axis (or d-axis) and quadrature axis (or q-axis) will be used. These concepts are commonly used in motor control techniques, such as field-oriented control (FOC), and are central for understanding the theory of operation for these techniques. In geometric terms, the d-axis and q-axis can be seen as a two-dimensional representation of the flux, current and/or voltage contributed by the three separate sinusoidal phase quantities of a three-phase motor. The d-axis is the axis directed in the same direction as a rotor flux. The q-axis is perpendicular to the d-axis. Thus, the q-axis is 90 degrees out of phase with the d-axis. In other words, the q-axis is offset by 90 degrees anti-clockwise from the d-axis. In simplistic terms, the d-axis is the main flux direction of the rotor, while the q-axis is the main torque producing direction. It is to be appreciated that any angle referred to herein may be seen as an electrical angle. In other words, the angle can be expressed in electrical degrees. Thus, "degrees" may be interchanged with "electrical degrees".

By using the d-axis and q-axis as reference, it becomes possible to describe and control the motor's electrical and magnetic behaviour in a more simplistic way. The current in the motor is typically transformed into the d-q reference frame, where the control algorithms can easily manipulate and control the torque and flux components independently. Moreover, by the transformation into the d-q reference frame, the alternating input signals (e.g. AC) of the motor can be represented as direct (or constant) input signals (e.g. DC), which simplifies analysis and calculations. It further enables precise control of the motor's torque and speed.

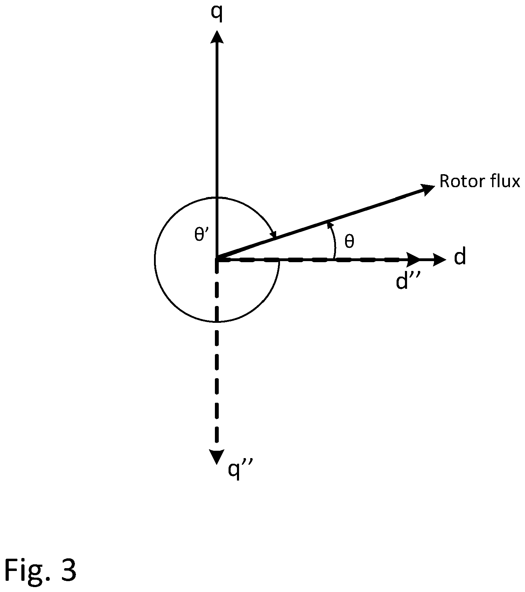

Fig. 3 schematically illustrates the above-mentioned concept of the d-axis and the q-axis. The resolver offset (represented e.g. as the angle denoted θ) can be defined as the angle between the direction of the rotor flux (i.e. a real (or actual) d-axis) and an estimated d-axis (herein represented by the arrow denoted d). The estimated d-axis should be understood as the d-axis as determined from the resolver. In other words, the estimated d-axis may be seen as the direction of the flux as seen by the resolver. Consequently, the resolver offset (angle) θ can also be found as the angle between an actual q-axis (not shown), being perpendicular to direction of the rotor flux, and an estimated q-axis (herein represented by the arrow denoted q) perpendicular to the estimated d-axis d. Thus, after having determined the resolver offset angle θ, the control of the motor can be adapted such that the real d-axis (i.e. the rotor flux direction as illustrated in Fig. 3) and the estimated d-axis are aligned.

Turning back to the change in speed sign definition, if changing what rotor rotation direction corresponds to positive speed sign, and what rotor rotation direction corresponds to negative speed sign, the same definition needs to be used by the resolver, since the resolver is supposed to provide feedback of the angular position and/or movement of the rotor to the motor control system. To achieve the change in speed sign definition, also a resolver sequence has to be changed, similar to the way of changing the current phase sequence. However, an effect of changing the speed sign definition is that any previously calibrated resolver offset angle is no longer correct, and a new resolver offset angle has to be determined.

As used herein, the wording "resolver offset", as represented/denoted with an angle "0", may be understood as being substantially the same as the wording "resolver offset angle". Put differently, the wordings "resolver offset" and "resolver offset angle" is in the present disclosure used interchangeably, unless otherwise stated or understood from the context.

As used herein, the wording "sequence", as in "current phase sequence" or "resolver sequence", may be understood as a configuration of input and/or output signals of the current phase and resolver. More specifically, the wording "current phase sequence" may be further understood by the following example, in which the three different phases of the three-phase motor are denoted by A, B, and C. When connecting the phase current cables between the motor and inverter, an A connection of the inverter should be connected to an A connection of the motor. Similarly, the B connection should be connected to B connection, and C connection to C connection. If instead A connection of the inverter is connected to B connection of the motor, the B connection of the inverter is connected to the A connection of the motor, and the C connection of the inverted is connected to the C connection of the motor, another sequence (BAC instead of ABC) is achieved. In a three-phase motor, a total of 6 combinations can be achieved. Change in resolver sequence can be achieved in a similar way. When it comes to physically connections, the connections between cos and sin can be swapped, i.e. by connecting cos from resolver to a sin harness of the control system and sin from resolver to a cos harness of the control system. The concepts of current phase sequence and resolver sequence will be further exemplified below by a number of ways of changing the respective sequences.

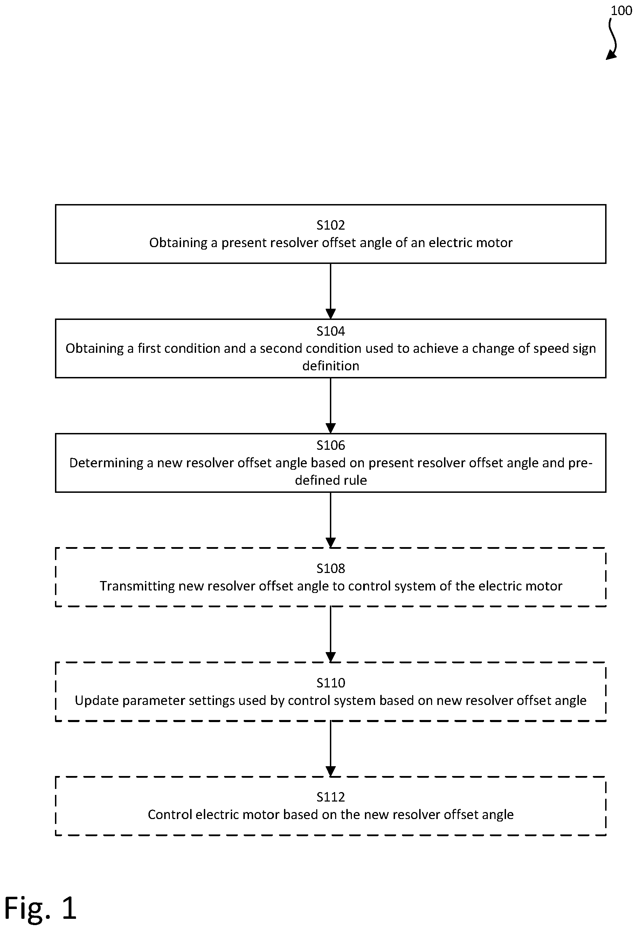

A method 100 for determining a new resolver offset angle, $\Theta'$, for a three-phase electric motor (sometimes referred to as just "motor") after change of a speed sign definition of said electric motor, as well as a device 200 for performing the method, will now be described with reference to Fig. 1 to 3. The method 100 may be a computer implemented method. The present inventive concept can be applicable to any machine comprising a 3-phase electric motor, such as electric vehicles, industrial machinery, robotics etc. In the following, the inventive concept will mainly be described in connection with vehicles (such as electric or hybrid vehicles). However, it is to be appreciated that the present inventive concept is not limited to this field.

Figure 1 is a schematic flowchart representation of a method 100 for determining a new resolver offset angle, $\Theta'$, of a three-phase electric motor after change of a speed sign definition of said electric motor. The speed sign definition is herein changed by adjusting a current phase sequence of the electric motor and a resolver sequence of a resolver of the electric motor.

The method 100 comprises obtaining S102 a present resolver offset angle, $\theta$, wherein the present resolver offset angle, $\theta$, is a resolver offset angle of the electric motor prior to changing the speed sign definition. In other words, the "present" resolver offset angle may be seen as a" previously determined", or "previous" resolver offset angle. Put differently, the present resolver offset angle may be seen as default or working resolver offset angle before changing the speed sign definition. The present resolver offset angle may thus be a resolver offset angle determined by a resolver offset calibration procedure or provided by a supplier of the electric motor. In contrast, the "new" resolver offset angle should be understood as a resolver offset angle determined by means of the present method 100. In other words, the new resolver offset angle may be seen as an "adjusted" or "updated" resolver offset angle, which is determined based on the "present" resolver offset angle.

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc. Obtaining S102 the present resolver offset angle may for instance comprise receiving the present resolver offset angle from a control system of the electric motor, or as a user input.

Moreover, the method 100 further comprises obtaining S104 a first condition of the adjustment of the current phase sequence and a second condition of the adjustment of the resolver sequence used to achieve the change of speed sign definition. The first and second conditions should be construed as a specification of how the current phase sequence and resolver sequence were adjusted respectively. To achieve a change in speed sign definition on the current phase sequence of a three-phase electric motor, one could swap any two input phases of the three phases of the electric motor. The three phases may sometimes be referred to as the first, second and third phases, or the A, B and C phases. To change the speed sign definition, one could either swap the first (i.e. A) and third (i.e. C) phases, the first and second (i.e. B) phases, or the second and third phases. Thus, the first condition of the adjustment of current phase sequence may be one of: (i) swapping a second and a third phase of the electric motor, (ii) swapping a first and the second phase of the electric motor, or (iii) swapping the first and the third phase of the electric motor. Swapping any two phases may be construed as changing the order of the two phases. Put differently, swapping e.g. the A phase and B phase may be achieved by providing the input signal intended to the A phase to the B phase, and vice versa. This may be achieved by either physically swapping phase current cable connections between an inverter and the motor, or change the signal connection in software used for the control of the motor.

To achieve a change in speed sign definition on the resolver sequence, one could either swap sine and cosine input signals before the resolver demodulation or reverse the position and speed signals after the resolver demodulation. Thus, the second condition of the change of resolver sequence may be one of: (iv) reversing a position and a speed signal demodulated from a resolver signal or (v) swapping a sin and cos signal of the resolver. By reversing the position and speed signal, it is herein meant reversing a sign of the position and speed signal. More specifically, reversing the speed signal can be achieved by changing the sign of the speed signal, i.e. changing a signal value x from plus to minus (i.e. x to -x, or -x to x), or vice versa. Reversing the position signal can be achieved by changing the sign of the position signal (given in electrical degrees, e.g. a minus degree). In addition, to avoid using a minus-degree sign, 360 degrees may be added to the position signal after changing the sign, in order to keep the position signal in the range of 0 to 360 degrees. Put differently, the second condition may be formulated as inverting a position and inverting a speed signal demodulated from the resolver signal. By the wording "resolver signal", it is herein meant any output signal form the resolver from which the rotor position can be derived. The resolver signal may comprise one or more output signals. Swapping the sine and cosine signal of the resolver may be understood as taking the output of an expected sine output as a cosine output and vice versa.

The method 100 may comprise obtaining at the step S104, any information indicative of the first and the second conditions, e.g. via indirect steps and/or signals. The wording "information indicative of", as in "information indicative of a first (or second) condition", should herein be understood as any form of data which can be used to determine or define the first and second conditions. The information may e.g. be a signal specifying the first condition of the adjustment of current phase and the second condition of adjustment of the resolver sequence. In some embodiments, the step denoted S104 may be performed as two separate sub-steps. The two sub-steps may be performed concurrently, with partial concurrence or at different times. Thus, the step denoted S104 may be formulated as obtaining the first condition of the adjustment of the current phase sequence in a first sub-step and obtaining the second condition of the adjustment of the resolver sequence in a second sub-step.

Moreover, the method 100 further comprises determining S106 the new resolver offset angle, $\theta'$, based on the present resolver offset angle $\theta$, and a pre-defined rule, wherein the pre-defined rule is based on the first and second conditions. Put differently, the new resolver offset angle is determined by applying the pre-defined rule to the present resolver offset angle. Moreover, the pre-defined rule may be defined based on what the first and second conditions are. Thus, depending on the first and second conditions relating to how the speed sign definition change was achieved, the pre-defined rule may be different. More specifically, the pre-defined rule may be selected from a plurality of pre-defined rules based on the first and second conditions. The plurality of pre-defined rules may comprise one pre-defined rule for each way the change of speed sign definition can be achieved. In some embodiments, the plurality of pre-defined rules may comprise six pre-defined rules: each possible first condition may be combined with either one of the two possible second conditions, as described above. How the pre-defined rule is based on the first and second conditions will be further described in the following.

In response to the first condition being (i) swapping the second and third phases, and the second condition being (iv) reversing a position and a speed signal demodulated from a resolver signal, the new resolver offset angle may be determined S106 according to the pre-defined rule $\theta' = -\theta$. In other words, the pre-defined rule may be selected as $\theta' = -\theta$, in case the first condition is (i) swapping the second and third phases, and the second condition is (iv) reversing a position and a speed signal demodulated from a resolver signal.

In response to the first condition being (i) swapping the second and third phases, and the second condition being (v) swapping a sin and cos signal of the resolver, the new resolver offset angle may be determined S106 according to the pre-defined rule $\theta' = -90 - \theta$. In other words, the pre-defined rule may be selected as $\theta' = -90 - \theta$, in case the first condition is (i) swapping the second and third phases and the second condition is (v) swapping a sin and cos signal of the resolver.

In response to the first condition being (ii) swapping the first and second phases, and the second condition being (iv) reversing a position and a speed signal demodulated from a resolver signal, the new resolver offset angle may be determined S106 according to the pre-defined rule $\theta' = 120 - \theta$. In other words, the pre-defined rule may be selected as $\theta' = 120 - \theta$, in case the first condition is (ii) swapping the first and second phases and the second condition is (iv) reversing a position and a speed signal demodulated from a resolver signal.

In response to the first condition being (ii) swapping the first and second phases, and the second condition being (v) swapping a sin and cos signal of the resolver, the new resolver offset angle may be determined S106 according to the pre-defined rule $\theta' = 30 - \theta$. In other words, the pre-defined rule may be selected as $\theta' = 30 - \theta$, in case the first condition is (ii) swapping the first and second phases and the second condition is (v) swapping a sin and cos signal of the resolver.

In response to the first condition being (iii) swapping the first and third phases and the second condition being (iv) reversing a position and a speed signal demodulated from a resolver signal, the new resolver offset angle may be determined S106 according to the pre-defined rule $\theta' = 240 - \theta$. In other words, the pre-defined rule may be selected as $\theta' = 240 - \theta$, in case the first condition is (iii) and the second condition is (iv) reversing a position and a speed signal demodulated from a resolver signal.

In response to the first condition being (iii) swapping the first and third phases and the second condition being (v) swapping a sin and cos signal of the resolver, the new resolver offset angle may be determined S106 according to the pre-defined rule $\theta' = 150 - \theta$. In other words, the pre-defined rule may be selected as $\theta' = 150 - \theta$, in case the first condition is (iii) swapping the first and third phases and the second condition is (v) swapping a sin and cos signal of the resolver.

The above-described cases can be summarized in the following table, Table. 1, in which the headings of the columns correspond to the three different first conditions of the adjustment of the current phase sequence, i.e. conditions (i) to (iii), and the headings of the rows correspond to the two different second conditions of the adjustment of the resolver sequence, i.e. conditions (iv) and (v).

Table. 1

|  | (i): B/C swap | (ii): A/B swap | (iii): A/C swap |
|---|---|---|---|
| (iv): pos/speed | θ' = -θ | θ' = 120 - θ | θ' = 240 - θ |
| (v): sin/cos | θ' = -90 - θ | θ' = 30 - θ | θ' = 150 - θ |

The above-described pre-defined rules can be derived mathematically. In a three-phase electric motor, the three phases (which in the following will be denoted by A, B, and C) are out of phase from each other by 120 degrees. Typically, each phase consists of a sinusoidal AC waveform. By way of example, a derivation of the pre-defined rule for the case of the first condition being (i) swapping of B and C phase, and the second condition being (iv) reverse of position and speed signal will be described.

When current phases B and C are swapped, the new phase currents (a', b', and c') become:

$$a' = a, \qquad b' = c, \qquad c' = b \qquad (1)$$

By applying the so-called Clarke transformation, which transforms the three-phase currents to two-phase currents in a stator reference frame comprising two fixed orthogonal stator axes, $\alpha$ and $\beta$, it can be found that:

$$\alpha = \frac{2}{3}\left(a - \frac{b}{2} - \frac{c}{2}\right), \qquad \beta = \frac{2}{3}\left(\frac{\sqrt{3}}{2}b - \frac{\sqrt{3}}{2}c\right) \qquad (2)$$

From equation (1) and (2), the new $\alpha'$ and $\beta'$ (after swapping B and C phases) become:

$$\alpha' = \alpha, \qquad \beta' = -\beta \qquad (3)$$

Park transformation, which transforms the two currents in the stator reference frame to the rotating reference frame of the direct axis (or d-axis) and quadrature axis (or q-axis), it can be found that:

$$d = \cos\delta \cdot \alpha + \sin\delta \cdot \beta, \qquad q = -\sin\delta \cdot \alpha + \cos\delta \cdot \beta \qquad (4)$$

where $\delta$ is the angle (i.e. position) of the rotor.
From equation (3) and (4) (3)(3), the new (i.e. after current phase swapping) d' and q' become:

$$d' = \cos\delta \cdot \alpha - \sin\delta \cdot \beta, \qquad q' = -\sin\delta \cdot \alpha - \cos\delta \cdot \beta \qquad (5)$$

When reversing position and speed, the rotor angle after the change in speed sign definition, 8', becomes:

$$\delta' = 360 - \delta = -\delta \qquad (6)$$

wherein $\delta$ denotes the rotor angle before changing the speed sign definition. From equation (5)(3) and (6)(3)(3), the new (i.e. after also changing the resolver sequence) d" and q" become:

$$d'' = \cos\delta \cdot \alpha + \sin\delta \cdot \beta, \qquad q'' = \sin\delta \cdot \alpha - \cos\delta \cdot \beta \qquad (7)$$

Comparing equation (7) and (4), it is observable that after swapping current phase B and C and reversing the position and speed, the relation between the new d" and q", and the previous d and q becomes:

$$d'' = d, \qquad q'' = -q \qquad (8)$$

To illustrate the implications of equation (8), Fig. 3 provides a graphical illustration of how the previous dq reference frame relates to the new dq reference frame. The arrow denoted "Rotor flux" represents the direction of the rotor flux, i.e. the real or actual d-axis. The arrows denoted d and q refers to the estimated d and q-axis before the change of speed sign definition. Thus, the resolver offset angle before the change of speed sign definition can be defined by the angle denoted $\theta$. Further the new resolver offset angle is shown as $\Theta'$. The arrows denoted d" and q" refers to the estimated d and q-axis after the change of speed sign definition, i.e. the new d and q-axis. As equation (8) suggest, the new estimated d-axis, d", coincides with the previous estimated d-axis, d. However, the new estimated q-axis, q" has the opposite direction (turned 180 degrees) to the previous estimated q-axis q. It can be further noted that the new resolver offset angle $\theta'$ can be defined in the new dq reference frame as $-\theta$. The resolver offset can be seen as the angle between the estimated d-axis to the rotor flux, going from the estimated d-axis towards the estimated q axis (as indicated by an arrow). Thus, after acquiring the new dq reference frame, the new resolver offset $\theta'$ is defined from the axis denoted d" to rotor flux, in the direction towards the axis denoted q", as shown by an arrow of the marked angle for $\theta'$. Since the new dq reference frame is mirrored compared to the previous dq reference frame, the new resolver offset angle $\theta'$ needs to be seen from clockwise direction instead of the anti-clockwise direction as the present resolver offset angle $\theta$. As can be concluded from Fig. 3, the new resolver offset angle $\theta'$ is then given by $360 - \theta'$, which is the same as $-\theta$, which corresponds to the pre-defined rule given in Table. 1 for the present case.

The method 100 may further comprise transmitting S108 the new resolver offset angle to a control system of the electric motor. For instance, in a case where the new resolver offset angle is determined externally to the control system, the new resolver offset angle may be transmitted to the control system to enable the electric motor to be controlled using the new resolver offset angle.

The method 100 may further comprise updating S110 parameter settings used by the control system of the electric motor based on the new resolver offset angle. For instance, in a case where the control system determines the new resolver offset angle, or receives the resolver offset angle from another device, the parameter settings relating to the resolver offset calibration can be updated with the new resolver offset angle.

The method 100 may further comprise controlling S112 the electric motor, using the control system of the motor, based on the new resolver offset angle. In other words, the control system may perform the motor control based on the new resolver offset angle.

In some embodiments, the method for determining a new resolver offset angle, $\theta'$, of a three-phase electric motor after change of a speed sign definition of said electric motor, wherein the speed sign definition is changed by adjusting a current phase sequence and a resolver sequence of the electric motor can be formulated as comprising the following steps; obtaining a present resolver offset angle, $\theta$, wherein the present resolver offset angle, $\theta$, is a resolver offset angle of the electric motor prior to changing the speed sign definition; and determining the new resolver offset angle, $\Theta'$, based on the present resolver offset angle, $\theta$. The method may further comprise obtaining a first condition of the adjustment of the current phase sequence and a second condition of the adjustment of the resolver sequence used to achieve the change of speed sign definition. Determining the new resolver offset angle may then be further based on a pre-defined rule, wherein the pre-defined rule is based on the first and second conditions.

Executable instructions for performing these functions are, optionally, included in a non-transitory computer-readable storage medium or other computer program product configured for execution by one or more processors.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

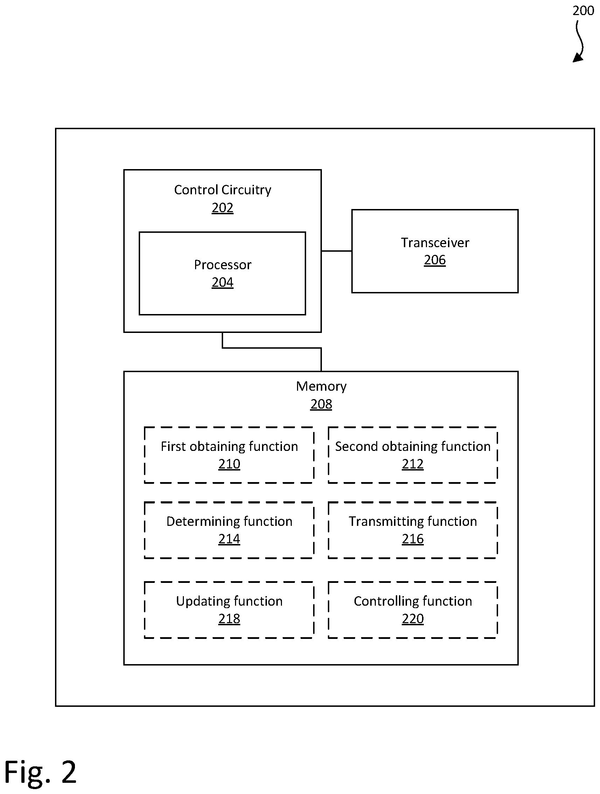

Figure 2 is a schematic illustration of a device 200 for determining a new resolver offset angle of a three-phase electric motor after change of a speed sign definition of said electric motor. In particular, the device 200 is configured to perform the techniques described in the foregoing with reference to Fig. 1. The device 200 may e.g. be provided locally in a vehicle (or any other machine) comprising the electric motor, such as a control system of the motor. However, as can be readily understood, the device 200 may be provided as an external device to the vehicle, such as a remote server or cloud implementation, or as a calibration device used in determining the resolver offset angle of the electric motor. In such case, the device 200 may be communicatively connected to the vehicle (or motor) either wirelessly or by wired connection.

The device 200 comprises control circuitry 202. The control circuitry 202 may physically comprise one single circuitry device. Alternatively, the control circuitry 202 may be distributed over several circuitry devices. As an example, the device 200 may share its control circuitry 202 with other parts of the vehicle (or machine), such as a control system of the vehicle. In another example, the device 200 may be a motor control system configured to perform the overall control of the motor.

As shown in the example of Fig. 2, the device 200 may further comprise a transceiver 206 and a memory 208. The control circuitry 202 being communicatively connected to the transceiver 206 and the memory 208. The control circuitry 202 may comprise a data bus, and the control circuitry 202 may communicate with the transceiver 206 and/or the memory 208 via the data bus.

The control circuitry 202 may be configured to carry out overall control of functions and operations of the device 200. The control circuitry 202 may include a processor 204, such as a central processing unit (CPU), microcontroller, or microprocessor. The processor 204 may be configured to execute program code stored in the memory 208, in order to carry out functions and operations of the device 200. The control circuitry 202 is configured to perform the steps of the method 100 as described above in connection with Fig. 1. The steps may be implemented in one or more functions stored in the memory 208. The control circuitry 202 may be configured to execute a first obtaining function 210, a second obtaining function 212, and/or a determining function 214. The control circuitry 202 may be further configured to execute a transmitting function 216, an updating function 218 and/or a controlling function 220. It should be noted that the various function and operation of the device 200 may be implemented in additional functions than those described herein. In addition, one or more of the above functions may be implemented together in a common function. For example, the first and second determining function 210, 212 may be implemented as a common determining function.

The transceiver 206 may be configured to enable the device 200 to communicate with other devices. The transceiver 206 may both transmit data from and receive data to the device 200. For example, the device 200 may obtain/send data from/to the motor and resolver. Further, the device 200 may transmit data to other units or systems connected to the motor.

The memory 208 may be a non-transitory computer-readable storage medium. The memory 208 may be one or more of a buffer, a flash memory, a hard drive, a removable media, a volatile memory, a non-volatile memory, a random access memory (RAM), or another suitable device. In a typical arrangement, the memory 208 may include a non-volatile memory for long term data storage and a volatile memory that functions as system memory for the device 200. The memory 208 may exchange data with the circuitry 202 over the data bus. Accompanying control lines and an address bus between the memory 208 and the circuitry 202 also may be present.

Functions and operations of the device 200 may be implemented in the form of executable logic routines (e.g., lines of code, software programs, etc.) that are stored on a non-transitory computer readable recording medium (e.g., the memory 208) of the device 200 and are executed by the circuitry 202 (e.g. using the processor 204). Put differently, when it is stated that the circuitry 202 is configured to execute a specific function, the processor 204 of the circuitry 202 may be configured execute program code portions stored on the memory 208, wherein the stored program code portions correspond to the specific function. Furthermore, the functions and operations of the circuitry 202 may be a stand-alone software application or form a part of a software application that carries out additional tasks related to the circuitry 202. The described functions and operations may be considered a method that the corresponding device is configured to carry out, such as the method 100 discussed above in connection with Fig. 1. Also, while the described functions and operations may be implemented in software, such functionality may as well be carried out via dedicated hardware or firmware, or some combination of one or more of hardware, firmware, and software. In the following, the function and operations of the device 200 is described.

The control circuitry 202 is configured to obtain a present resolver offset angle, wherein the present resolver offset angle is a resolver offset angle of the electric motor prior to changing the speed sign definition. This may be performed e.g. by execution of the first obtaining function 210.

The control circuitry 202 is further configured to obtain a first condition of the adjustment of the current phase sequence and a second condition of the adjustment of the resolver sequence used to achieve the change of speed sign definition. This may be performed e.g. by execution of the second obtaining function 212.

The control circuitry 202 is further configured to determine the new resolver offset angle based on the present resolver offset angle and a pre-defined rule, wherein the pre-defined rule is based on the first and second conditions. This may be performed e.g. by execution of the determining function 214.

The control circuitry 202 may be further configured to transmit the new resolver offset angle to a control system of the electric motor. This may be performed e.g. by execution of the transmitting function 216.

The control circuitry 202 may be further configured to update parameter settings used by the control system of the electric motor based on the new resolver offset angle. This may be performed e.g. by execution of the updating function 218.

The control circuitry 202 may be further configured to control the electric motor, using the control system of the motor, based on the new resolver offset angle. This may be performed e.g. by execution of the controlling function 220.

It should be noted that principles, features, aspects, and advantages of the method 100 as described above in connection with Fig. 1, are applicable also to the device 200 described herein. In order to avoid undue repetition, reference is made to the above.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

It should be noted that any reference signs do not limit the scope of the claims, that the invention may be at least in part implemented by means of both hardware and software, and that the same item of hardware may represent several "means" or "units".

## Claims

1. A method (100) for determining a new resolver offset angle ($\Theta'$) of a three-phase electric motor after change of a speed sign definition of said electric motor, wherein the speed sign definition is changed by adjusting a current phase sequence and a resolver sequence of the electric motor, the method (100) comprising:

   obtaining (S102) a present resolver offset angle ($\theta$), wherein the present resolver offset angle ($\Theta$) is a resolver offset angle of the electric motor prior to changing the speed sign definition;
   obtaining (S104) a first condition of the adjustment of the current phase sequence and a second condition of the adjustment of the resolver sequence used to achieve the change of speed sign definition; and
   determining (S106) the new resolver offset angle ($\Theta'$) based on the present resolver offset angle ($\Theta$) and a pre-defined rule, wherein the pre-defined rule is based on the first and second conditions.

2. The method (100) according to claim 1, wherein the first condition of the adjustment of current phase sequence is one of: (i) swapping a second and a third phase of the electric motor, (ii) swapping a first and the second phase of the electric motor, or (iii) swapping the first and the third phase of the electric motor.

3. The method (100) according to claim 1 or 2, wherein the second condition of the change of resolver sequence is one of: (iv) reversing a position and a speed signal demodulated from a resolver signal or (v) swapping a sin and cos signal of the resolver.

4. The method (100) according to any one of the claims 1 to 3, wherein the pre-defined rule is selected from a plurality of pre-defined rules based on the first and second conditions.

5. The method (100) according to any of the claims 1 to 4, wherein in response to the first condition being (i) swapping the second and third phases, and the second condition being (iv) reversing a position and a speed signal demodulated from a resolver signal, the new resolver offset angle is determined (S106) according to the pre-defined rule $\theta' = -\theta$.

6. The method (100) according to any of the claims 1 to 5, wherein in response to the first condition being (i) swapping the second and third phases, and the second condition being (v) swapping a sin and cos signal of the resolver, the new resolver offset angle is determined (S106) according to the pre-defined rule $\theta' = -90 - \theta$.

7. The method (100) according to any of the claims 1 to 6, wherein in response to the first condition being (ii) swapping the first and second phases, and the second condition being (iv) reversing a position and a speed signal demodulated from a resolver signal, the new resolver offset angle is determined (S106) according to the pre-defined rule $\theta' = 120 - \theta$.

8. The method (100) according to any of the claims 1 to 7, wherein in response to the first condition being (ii) swapping the first and second phases, and the second condition being (v) swapping a sin and cos signal of the resolver, the new resolver offset angle is determined (S106) according to the pre-defined rule $\theta' = 30 - \theta$.

9. The method (100) according to any of the claims 1 to 8, wherein in response to the first condition being (iii) swapping the first and third phases and the second condition being (iv) reversing a position and a speed signal demodulated from a resolver signal, the new resolver offset angle is determined (S106) according to the pre-defined rule $\theta' = 240 - \theta$.

10. The method (100) according to any of the claims 1 to 9, wherein in response to the first condition being (iii) swapping the first and third phases and the second condition being (v) swapping a sin and cos signal of the resolver, the new resolver offset angle is determined (S106) according to the pre-defined rule $\theta' = 150 - \theta$.

11. The method (100) according to any one of the claims 1 to 10, further comprising transmitting (S108) the new resolver offset angle to a control system of the electric motor.

12. The method (100) according to any one of the claims 1 to 11, further comprising controlling (S112) the electric motor, using a control system of the motor, based on the new resolver offset angle.

13. A computer program product comprising instructions which, when the program is executed by a computing device, causes the computing device to carry out the method (100) according to any one of claims 1 to 12.

14. A device (200) for determining a new resolver offset angle ($\Theta'$) of a three-phase electric motor after change of a speed sign definition of said electric motor, wherein the speed sign definition is changed by adjusting a current phase sequence and a resolver sequence of the electric motor, the device (200) comprising a control circuitry (202) configured to:

obtain a present resolver offset angle ($\theta$), wherein the present resolver offset angle ($\Theta$) is a resolver offset angle of the electric motor prior to changing the speed sign definition;
obtain a first condition of the adjustment of the current phase sequence and a second condition of the adjustment of the resolver sequence used to achieve the change of speed sign definition; and
determine the new resolver offset angle ($\Theta'$) based on the present resolver offset angle ($\Theta$) and a pre-defined rule, wherein the pre-defined rule is based on the first and second conditions.

15. The device (200) according to claim 14, wherein the control circuitry (202) is further configured to transmit the new resolver offset angle to a control system of the electric motor.

100

```
┌────────────────────────────────────────────────────────────────────────┐
│                               S102                                       │
│           Obtaining a present resolver offset angle of an electric motor │
└────────────────────────────────────────────────────────────────────────┘
                                   │
                                   ▼
┌────────────────────────────────────────────────────────────────────────┐
│                               S104                                       │
│  Obtaining a first condition and a second condition used to achieve a    │
│                  change of speed sign definition                         │
└────────────────────────────────────────────────────────────────────────┘
                                   │
                                   ▼
┌────────────────────────────────────────────────────────────────────────┐
│                               S106                                       │
│  Determining a new resolver offset angle based on present resolver       │
│              offset angle and pre-defined rule                           │
└────────────────────────────────────────────────────────────────────────┘
                                   │
                                   ▼
┌ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┐
│                               S108                                       │
│   Transmitting new resolver offset angle to control system of the        │
│                         electric motor                                   │
└ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┘
                                   │
                                   ▼
┌ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┐
│                               S110                                       │
│  Update parameter settings used by control system based on new resolver  │
│                         offset angle                                     │
└ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┘
                                   │
                                   ▼
┌ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┐
│                               S112                                       │
│         Control electric motor based on the new resolver offset angle     │
└ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┘
```

# Fig. 1

200

**Control Circuitry**
**202**

**Processor**
**204**

**Transceiver**
**206**

**Memory**
**208**

First obtaining function
210

Second obtaining function
212

Determining function
214

Transmitting function
216

Updating function
218

Controlling function
220

# Fig. 2

Fig. 3

Europäisches
Patentamt

European
Patent Office

Office européen
des brevets

# EUROPEAN SEARCH REPORT

Application Number

EP 23 19 8299

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 433 503 B1 (UEMATSU TATSUYA [JP] ET AL) 13 August 2002 (2002-08-13)<br>* column 1, line 57 – line 67 *<br>* column 2, line 10 – line 27; figure 6 *<br>* column 8, line 26 – line 53; figure 3 *<br>----- | 1,4, 11-15 | INV.<br>H02P23/24<br>H02P6/17<br>H02P6/22 |
| A | US 2022/135120 A1 (NISHIOKA YUSUKE [JP] ET AL) 5 May 2022 (2022-05-05)<br>* paragraph [0054] – paragraph [0055]; figure 5 *<br>----- | 1-15 | |

TECHNICAL FIELDS
SEARCHED      (IPC)

H02P

The present search report has been drawn up for all claims

| Place of search | Date of completion of the search | Examiner |
|---|---|---|
| Munich | 21 February 2024 | Schürle, Patrick |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 19 8299

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2024

| Patent document cited in search report | | Publication date | Patent family member(s) | | Publication date |
|---|---|---|---|---|---|
| US 6433503 | B1 | 13-08-2002 | DE | 10014626 A1 | 19-10-2000 |
| | | | JP | 3906429 B2 | 18-04-2007 |
| | | | JP | 2000278989 A | 06-10-2000 |
| | | | US | 6433503 B1 | 13-08-2002 |
| US 2022135120 | A1 | 05-05-2022 | CN | 113557661 A | 26-10-2021 |
| | | | EP | 3916996 A1 | 01-12-2021 |
| | | | JP | 7211515 B2 | 24-01-2023 |
| | | | JP | WO2021161650 A1 | 19-08-2021 |
| | | | US | 2022135120 A1 | 05-05-2022 |
| | | | WO | 2021161650 A1 | 19-08-2021 |

EPO FORM P0459

For more details about this annex : see Official Journal of the European Patent Office, No. 12/82